# EUROPÄISCHE PATENTSCHRIFT

(11) **EP 3 530 106 B1**
(45) Veröffentlichungstag und Bekanntmachung des Hinweises auf die Patenterteilung: **14.10.2020**
(21) Anmeldenummer: 19156477.2
(22) Anmeldetag: 11.02.2019
(51) Int. Cl.: A01F 15/14, B30B 9/30, B65B 27/12

(54) **KNOTERVORRICHTUNG**
NODE DEVICE
DISPOSITIF NOUEUR

(30) Priorität: 22.02.2018 DE 102018104050
(43) Veröffentlichungstag der Anmeldung: 28.08.2019
(73) Patentinhaber: Stein, Manfred, 49779 Niederlangen (DE); Stein, Dominik, 49779 Niederlangen (DE)
(72) Erfinder: Stein, Manfred, 49779 Niederlangen (DE); Stein, Dominik, 49779 Niederlangen (DE)
(74) Vertreter: Weeg, Thomas

(56) Entgegenhaltungen:
- EP-A1- 2 941 951
- DE-A1-102008 041 120
- DE-C- 869 277
- DE-C- 938 885

## Beschreibung

Die vorliegende Erfindung bezieht sich auf eine Knotervorrichtung zum Knoten eines in einer Vorhalteposition entlang einer Vorhaltelinie vorgehaltenen doppelten Garnstrangs eines Bindeguts mit einem um eine Drehachse rotierend antreibbaren Knoterhaken, einer Garnführungsvorrichtung, mit der das Garn während eines Knotvorgangs geführt ist, und einer Trennvorrichtung zum Abschneiden eines fertig geknoteten Strangs des Bindeguts.

In der Landtechnik sind grundsätzlich zwei gattungsgemäße Knotertypen bekannt, die Knoter nach dem Deering-Prinzip, die einen Strangknoten erzeugen, und die Knoter nach dem McCormick-Prinzip, die einen Schlaufenknoten herstellen. Knoter nach dem Deering-System werden beispielsweise von der Firma Raussendorf Maschinen- und Gerätebau GmbH produziert. Knoter nach dem McCormick-Prinzip stellt beispielsweise die Firma Usines Claas France S.A. her. Die Firma Rasspe Systemtechnik GmbH stellt beispielsweise Knotervorrichtungen her, die nach beiden Systemen arbeiten. Die Knoter finden aber nicht nur Verwendung in landwirtschaftlichen Ballenpressen, sondern auch in Verdichtungsvorrichtungen beispielsweise der Abfall- und Verpackungstechnik, wenn Materialbündel gebildet werden, die durch ein verknotetes Garn zusammengehalten sind.

Die bekannten Knotervorrichtungen sind mechanisch kompliziert aufgebaute Vorrichtungen, weil sie mehrere mechanisch angetriebene Komponenten aufweisen, deren Bewegungen genau aufeinander abgestimmt sein müssen, damit ein fester Knoten gebildet werden kann. So ist beispielsweise ein um 360° drehender rotierend angetriebener Knoterhaken erforderlich, auf den zuvor der doppelte Garnstrang des Bindeguts aufgelegt worden ist. Der entlang seiner Längsachse nicht bewegliche Knoterhaken bildet durch eine Umdrehung um seine eigene Achse eine Schlaufe im doppelten Garnstrang. Der um die Schlaufe herumgeführte über die Schlaufe überstehende doppelte Garnstrang wird sodann eingeklemmt, damit die Schlaufe darüber abrutschen kann. Die Klemmnase, die den überstehenden doppelten Garnstrang hält, muss am Knoterhaken separat beweglich und angetrieben sein. Als weitere Elemente sind ein Fadenmitnehmer und eine Schneidvorrichtung erforderlich, die die beiden Garnstränge aufnehmen und abschneiden, wenn der fertige Knoten gebildet worden ist. Auch die Schneidvorrichtung muss genau getaktet sein, um die Garnstränge nicht schon abzuschneiden, wenn der Knoten noch gebildet wird. Der Antrieb der beweglichen Komponenten einer herkömmlichen Knotervorrichtung erfolgt über eine mechanische Antriebswelle, deren Drehbewegung auf eine Antriebsscheibe übertragen wird, deren Verzahnung jeweils die beweglichen Komponenten der Knotervorrichtung antreibt.

Die EP 2 941 951 A1 zeigt eine Knotenvorrichtung mit den Merkmale des Oberbegriffs des Anspruchs 1.

Die bekannten Knotervorrichtungen sind schwer, aufwendig in der Herstellung, sie benötigen viel Bauraum und sie sind empfindlich gegen Verschmutzungen, weshalb häufig noch aufwendige Gebläsesysteme neben den Knotervorrichtungen aufgebaut werden, um im Knoterbereich anfallenden Schmutz wegzublasen.

Es ist die Aufgabe der vorliegenden Erfindung, eine Vorrichtung zum Knoten eines doppelten Garnstranges zu schaffen, der einen einfacheren Aufbau aufweist.

Die Aufgabe wird für eine gattungsgemäße Vorrichtung gelöst, indem der Knoterhaken als eine Knoterstange ausgebildet ist, die während eines Knotvorgangs mittels eines motorischen Antriebs in axialer Richtung entlang eines Verstellweges beweglich ist, über die Umfangsform der Knoterstange ein Mitnehmer zum Erfassen und Mitnehmen des doppelten Garnstrangs hervorsteht und in die Umfangsform der Knoterstange eine Nut eingeformt ist, die eine Form zur Aufnahme eines Abschnitts des doppelten Garnstrangs aufweist.

Zur Herstellung eines Knotens mit der verbesserten Knotervorrichtung wird ein doppelter Garnstrang von der Garnführungsvorrichtung in einer Vorhaltelinie vorgehalten, die sich in einer Richtung quer zur Drehachse der Knoterstange erstreckt. Mit der Querrichtung ist nicht eine genau rechtwinklig zur Drehachse ausgerichtete Orientierung gemeint, sondern eine Vorhaltelinie, die sich in Querrichtung über den Durchmesser der Knoterstange hinaus in einer geeigneten Winkellage zur Drehachse erstreckt. Durch eine Bewegung der Knoterstange aus einer Ausgangsstellung in eine axiale Richtung wird der Mitnehmer in einen Wirkbereich bewegt, in der er einen Kontakt zum doppelten Garnstrang erhält. Die Knoterstange ist also in axialer Richtung entlang des Verstellweges beweglich. Der doppelte Garnstrang legt sich dabei auf die Umfangsform der Knoterstange und/oder auf den Mitnehmer auf. Der Mitnehmer dient dem Zweck, den doppelten Garnstrang zu fangen und diesen bei einer Drehbewegung der Knoterstange um ihren Außenumfang zu wickeln.

Schon bei dieser Bewegung in axialer Richtung kann die Knoterstange auch um ihre Drehachse in eine Stellung gedreht werden, in der sich der Mitnehmer in einer günstigen Ausgangsstellung befindet, um den doppelten Garnstrang gut erfassen und mitnehmen zu können. Durch eine kurze Drehbewegung entgegen der Richtung, in die der doppelte Garnstrang auf der Knoterstange aufgewickelt werden soll, und eine darauf folgende Drehbewegung in Aufwickelrichtung des doppelten Garnstrangs kann dieser insbesondere in einer Schlaufe um den Mitnehmer gelegt werden, um den doppelten Garnstrang vom Mitnehmer gehalten weiter aufwickeln zu können. Wenn sich die Knoterstange in einer Position befindet, in der sie und/oder der Mitnehmer einen Kontakt zum doppelten Garnstrang hat, kann die Knoterstange um ihre Drehachse in eine Richtung gedreht werden, bei der sich der doppelte Garnstrang um den Umfang der Knoterstange und dabei bevorzugt auch um den Mitnehmer wickelt. Die Knoterstange kann um mehr als eine Umdrehung rotieren, um dabei den doppelten Garnstrang in eine Schlaufe zu legen. Die Rotationsbewegung kann sich beispielsweise auch auf zwei, drei oder mehr volle Umdrehungen erstrecken, um die Schlaufe zu bilden.

Wenn das Aufwickeln des doppelten Garnstranges auf die Knoterstange noch andauert oder vollständig abgeschlossen ist, kann die Knoterstange in axialer Richtung von der Vorhaltelinie weg bewegt werden. Dabei wird der doppelte Garnstrang mit der auf der Knoterstange aufgewickelten Schlaufe aus seiner Vorhaltelinie in die Bewegungsrichtung der Knoterstange gezogen. Von der Zuglast, die dabei auf die Schlaufe einwirkt, wird diese vom Mitnehmer und der Knoterstange abgezogen. In der Abziehbewegung kann ein Abschnitt des doppelten Garnstrangs, der einen ersten Teil der Schlaufe bildet, in die Nut rutschen, die in die Umfangsform der Knoterstange eingeformt ist. Über den in die Nut gerutschten ersten Teil der Schlaufe, der die Nut nun so ausfüllt, dass der übrige zweite Teil der Schlaufe nicht mehr in die Nut hineinrutschen kann, gleitet der zweite Teil der Schlaufe hinweg und von der Knoterstange in axialer Richtung ab. Der zweite Teil der Schlaufe ist durch diese Gleitbewegung um den in der Nut gehaltenen ersten Teil der Schlaufe gelegt. Unter Einwirkung einer Zuglast bekneift der zweite Teil der Schlaufe nun den Hals des ersten Schlaufenteils nach Art eines Knotens, der Knoten ist dadurch fertig gebildet.

Der Bewegungsablauf der Vorrichtung zur Herstellung eines Knoten kann also kurz so beschrieben werden, dass die Knoterstange eine Vorwärtsbewegung ausführt, um mit dem Mitnehmer den doppelten Garnstrang zu erfassen, danach wird der doppelte Garnstrang durch eine Drehbewegung der Knoterstange auf dieser aufgewickelt, dann wird die Knoterstange zurückgezogen, damit die bis dahin gebildete Schlaufe von der Knoterstange abrutschen kann, und dabei rutscht ein Abschnitt des doppelten Garnstrangs in eine in der Knoterstange befindliche Nut, damit der übrige Teil der gewickelten Schlaufe darübergleiten und dadurch den Knoten ausbilden kann.

Die erfindungsgemäße Knotervorrichtung ist wesentlich einfacher im Aufbau als die vorbekannten Knotervorrichtungen. Der neue Knoter erreicht eine hohe Funktionssicherheit, da die jeweiligen Knoten immer fest gebunden werden. Die Lagerböcke und Antriebe können leichter und kompakter ausgeführt werden. Die neue Knotervorrichtung ist auch weniger schmutzanfällig. In der Knotervorrichtung kann eine große Spreizung unterschiedlicher Garnqualitäten verarbeitet werden, ohne dass dadurch die Funktion und die Verlässlichkeit der Knotenbildung beeinträchtigt wird.

Nach einer Ausgestaltung der Erfindung ist der Mitnehmer als ein Finger ausgestaltet, der sich mit seiner Längsachse zumindest im Wesentlichen in eine Richtung quer zur Vorhaltelinie des doppelten Garnstrangs und zumindest annähernd längs der Drehachse der Knoterstange erstreckt und zumindest in einem Abschnitt so über die Umfangsform der Knoterstange hervorstehend positioniert ist, dass der doppelte Garnstrang durch den Zwischenraum zwischen dem Mitnehmer und dem Außenumfang der Knoterstange im Bereich des Mitnehmers hindurch geführt ist. Durch die Erstreckung in eine Richtung quer zur Vorhaltelinie kann der Mitnehmer bei einer Aufwickelbewegung gute Zugkräfte in den doppelten Garnstrang einleiten, ohne dass der Garnstrang dabei seitlich wieder vom Mitnehmer abzurutschen droht. Durch die Erstreckung zumindest annähernd längs der Drehachse kann das aufgewickelte Garnstrangpaket gut wieder vom Mitnehmer abgezogen werden, wenn die Knoterstange in axialer Richtung bewegt wird. Vorteilhaft hat der Mitnehmer eine zylindrische Grundform, an die sich das Garn gut anlegen kann.

Nach einer Ausgestaltung der Erfindung verläuft die Vorhalterichtung des doppelten Garnstrangs in seiner Vorhalteposition schräg zur Drehachse der Knoterstange. Durch den schrägen Verlauf der Vorhalterichtung wird das Garn bei einer Rotationsbewegung der Knoterstange nicht aufeinander, sondern nebeneinander auf der Knoterstange aufliegend gewickelt. Die beim Wickeln gebildete Schlaufe wird dadurch flacher und fester.

Nach einer Ausgestaltung der Erfindung verläuft die Nut in der Ruhestellung der Knoterstange zumindest annähernd parallel zur Vorhaltelinie. Durch diese Schrägstellung der Nut ist das Einwickeln eines Abschnitts des doppelten Garnstrangs in die Nut vereinfacht.

Nach einer Ausgestaltung der Erfindung verlaufen die Nut und die Längsachse des Mitnehmers schräg zur Drehachse der Knoterstange. Durch die schräg verlaufende Nut ergibt sich am Umfang der Knoterstange eine in axialer Richtung gesehen schräg oder spiralförmig verlaufende Einlaufkante, an der entlang der Garnstrang des ersten Teils der Schlaufe beim Abziehen des aufgewickelten Garnstrangpakets in die Nut hereinrutschen kann. Dadurch ergibt sich ein sicherer Einzug in die Nut. Der unter Zuglast stehende Garnstrang des ersten Teils der Schlaufe wird während der Rotationsbewegung der Knoterstange fortschreitend dem Verlauf der Einlaufkante der Spiralform folgend in die Nut hineingezogen. Es ist vorteilhaft, die Längsachse des Mitnehmers schräg zur Drehachse der Knoterstange auszurichten, um bei einer ebenfalls schräg zur Drehachse verlaufenden Vorhalterichtung des doppelten Garnstrangs die gebildete Schlaufe in Zugrichtung leicht vom Mitnehmer abziehen zu können. Die Schrägstellung der Nut verläuft zumindest annähernd parallel zur Vorhalterichtung des doppelten Garnstrangs.

Nach einer Ausgestaltung der Erfindung weist die Knoterstange an ihrem freien Ende eine sich in Abzugsrichtung verjüngende Form auf. Durch die sich in Abzugsrichtung verjüngende Form wird der Abzug des zweiten Teils der Schlaufe erleichtert. Nach einer Ausgestaltung der Erfindung ist benachbart zur Knoterstange eine Garnführungsvorrichtung angeordnet, die motorisch aus einer Ruhestellung in eine Richtung auf den in seiner Vorhalteposition vorgehaltenen doppelten Garnstrang zu beweglich ist, wobei die Garnführungsvorrichtung einen Mitnehmer aufweist, der mit seiner Raumform den doppelten Garnstrang bei einer fortgesetzten Bewegung der Garnführungsvorrichtung über die Vorhaltelinie hinweg in Bewegungsrichtung von der Vorhaltelinie wegbewegt, so dass sich der doppelte Garnstrang dadurch bei einer Rotationsbewegung der Knoterstange an einer in axialer Richtung versetzten Stelle auf die Knoterstange aufwickelt. Mit der Garnführungsvorrichtung ist es möglich, den Aufwickelprozess des doppelten Garnstrangs auf die Knoterstange zu beeinflussen. So kann beispielsweise die Wickelrichtung umgesteuert werden, um die Lagen der Garnstränge über Kreuz zu wickeln, oder es ist möglich, die doppelten Garnstränge genau nebeneinander zu legen. Die Bewegungen der Knoterstange und der Garnführungsvorrichtung sind vorteilhaft so aufeinander abgestimmt, dass sich ein gewünschtes Aufwickelbild der Schlaufe auf der Knoterstange einstellt. So kann beispielsweise die Knoterstange ist axialer Richtung stillstehen, während sich die Garnführungsvorrichtung bewegt, beide Elemente bewegen sich gegenläufig, oder beide Elemente sind bewegt, gegebenenfalls mit unterschiedlichen Bewegungsgeschwindigkeiten.

Nach einer Ausgestaltung der Erfindung fährt die Garnführungsvorrichtung so weit vor, dass der doppelte Garnstrang in einer Vorhalteposition gehalten ist, in der er in die in der Knoterstange befindliche Nut einläuft. Die Bewegung der Garnführungsvorrichtung wird dazu genutzt, den doppelten Garnstrang gezielt in eine Vorhalteposition zu bringen, in der der doppelte Garnstrang in die Nut einlaufen kann. Vorteilhaft wird dazu die Drehstellung der Knoterstange so eingestellt, dass die Nut mit ihrer Kanalöffnung dem doppelten Garnstrang zugewandt ist, wenn dieser auf Höhe der Nut vorgehalten ist. Durch die gezielte Einleitung des doppelten Garnstrangs in die Nut während des Aufwickelvorgangs kann die Funktionssicherheit der Knotervorrichtung gesteigert werden, weil dadurch der doppelte Garnstrang sicherer in die Nut einläuft.

Nach einer Ausgestaltung der Erfindung ist die Knoterstange für Bewegungen in axialer Richtung und/oder in Rotationsrichtung von einem elektrischen Servomotor angetrieben. Ein elektrischer Servomotor kann in seinen Bewegungen genau programmiert und gesteuert werden. Über die Programmierung können unterschiedliche Bewegungsprofile für unterschiedliches Garnmaterial in der Steuerung hinterlegt sein, so dass für jedes Garnmaterial der Knoten mit unterschiedlichen Bewegungsabläufen und -geschwindigkeiten gebildet werden kann. Für einen Servomotor kann genau programmiert werden, wann er wie schnell Bewegungen mit einer vorgegebenen Länge in welche Richtung ausführt. Ein Servomotor kann auch leicht sensor-überwacht werden, wodurch eine automatisierte Funktionskontrolle möglich ist.

Die Steuerung eines Servomotors erfolgt üblicherweise über eine elektronische Steuerung. Je nach Auslegung dieser Steuerung kann diese mit den Steuerungen anderer Maschinenkomponenten vernetzt sein. So kann die Steuerung des Servomotors Signale über den Bindestart, die Bewegung der Garnzuführnadel, einen ausreichenden Garnvorrat, eine ausreichende Garnspannung oder den Pressdruck in der Ballenpresse erhalten, um anhand dieser Daten die eigene Funktion zu optimieren. Auch kann die Bewegung der Knoterstange mit der Bewegung der Garnführungsvorrichtung koordiniert werden. Über die elektronische Steuerung sind also komplexere und koordinierte Bewegungsabläufe möglich, die auch anhand von Signalen von Überwachungssensoren beeinflusst werden können.

Die Knoterstange kann über den oder die Servomotoren schnell in vorbestimmte Positionen gefahren werden, so dass der doppelte Garnstrang mit einer sehr hohen Wiederholgenauigkeit gewickelt wird. Die Servomotoren sind bei einer vergleichsweise geringen Leistungsaufnahme ausreichend kräftig, um den doppelten Garnstrang zu einer Schlaufe wickeln und die Schlaufe von der Knoterstange abziehen zu können. Die Servomotoren sind kaum verschmutzungsanfällig. Sie beanspruchen nur einen vergleichsweise geringen Bauraum, sie sind wartungsarm betreibbar und sind leichter als vollmechanische oder hydraulische Antriebe.

Nach einer Ausgestaltung der Erfindung ist die Garnführungsvorrichtung von einem elektrischen Servomotor angetrieben. Für den hier vorgeschlagenen Servomotor gelten die vorstehend beschriebenen Vorteile entsprechend.

Nach einer Ausgestaltung der Erfindung ist in der Nut und/oder am freien Ende der Knoterstange eine Messerklinge angeordnet. Die Messerklinge dient dem Zweck, den doppelten Garnstrang hinter dem fertig gebildeten Knoten abzuschneiden, damit der Knoten nicht mehr am doppelten Garnstrang hängt. Wenn der doppelte Garnstrang mit der Messerklinge durchtrennt worden ist, kann sich auch der erste Teil der Schlaufe leicht aus der Nut lösen, da dieser zumindest einseitig nicht mehr mit dem doppelten Garnstrang verbunden ist. Für das Auslösen des ersten Teils der Schlaufe aus der Nut in der Knoterstange sind somit keine weiteren bewegten Maschinenkomponenten erforderlich. Das mit dem fertigen Knoten verpackte Materialbündel kann dann aus der Maschine abgefördert werden, in der das Materialbündel und der Knoten gebildet worden ist, beispielsweise einer Ballenpresse. Durch die Anbringung der Messerklinge an der Knoterstange ist keine separate Schneideinrichtung mehr erforderlich. Entsprechende Aggregate und Antriebe dafür können entfallen. Die Messerklinge wird zusammen mit der Knoterstange bewegt. Da der doppelte Garnstrang mit dem Knoten beim Abziehen unter einer Zuglast steht, wird er auch mit dieser Zuglast beim Abgleiten von der Knoterstange über die Messerklinge bewegt. Durch die Zuglast auf dem doppelten Garnstrang erfolgt mit der Messerklinge ein ziehender Schnitt. Die Messerklinge ist bevorzugt so angeordnet, dass ihre Schnittkante möglichst gerade in der Richtung der Zuglast steht. Wenn seitlich einwirkende Kräfte vermieden werden, sinkt das Risiko, dass die Klinge unter der Zuglast brechen könnte. Der Schnitt kann auch erfolgen, indem die Knoterstange eine oder mehrere Umdrehungen rotiert und dabei den noch an der Knoterstange hängenden Teil des doppelten Garnstrangs abschneidet. Die Schärfe der Klinge kann durch eine Kraftmessung an der Knoterstange während des laufenden Betriebs überwacht werden. Die Klinge ist an der Knoterstange leicht auswechselbar angebracht.

Nach einer Ausgestaltung der Erfindung ist entlang des Verstellweges der Knoterstange ein Abstreifer angeordnet, an dem der Mitnehmer bei einem Knotvorgang vorbei beweglich ist, wobei der Abstreifer so dicht an den Außenumfang der Knoterstange und/oder des Mitnehmers herangeführt ist, dass dieser einen auf die Knoterstange und/oder den Mitnehmer aufgewickelten doppelten Garnstrang bei einer Verstellbewegung der Knoterstange in axialer Richtung sperrt. Bei einem Knotvorgang fährt die Knoterstange vor, um den doppelten Garnstrang mit dem Mitnehmer zu erfassen, bevor der Garnstrang zu einer Schlaufe gewickelt wird. Da der Mitnehmer dabei am Abstreifer vorbei bewegt wird, liegt der Abstreifer nach der Vorfahrtbewegung der Knoterstange hinter dem Mitnehmer. Wenn der Mitnehmer dann den doppelten Garnstrang auf die Knoterstange aufwickelt, liegt auch die dadurch gebildete Schlaufe des doppelten Garnstrangs vor dem Abstreifer. Wird dann die Knoterstange wieder rückwärts bewegt, so wird dabei ein darauf aufgewickelter doppelter Garnstrang vom Abstreifer abgestreift. Der Abstreifer sichert es mechanisch ab, dass ein auf dem Mitnehmer und/oder der Knoterstange aufgewickelter doppelter Garnstrang bei einer Rückfahrbewegung der Kolbenstange zuverlässig vom Mitnehmer abgeschoben wird. Die Form des Abstreifers ist deshalb so an die Form der Knoterstange und/oder des Mitnehmers angepasst, dass er bei einer Verstellbewegung der Knoterstange dicht an diese und/oder den Mitnehmer heranreicht, und zwar in einem Bereich, in dem ein doppelter Garnstrang nach einer Aufwickelbewegung auf der Knoterstange und/oder dem Mitnehmer aufliegt. Der Abstreifer kann als Finger ausgestaltet sein, der von der Seite her an den Außenumfang der Knoterstange und/oder des Mitnehmers heranreicht, oder er ist beispielsweise als ein Rohr ausgebildet, das die Knoterstange und/oder den Mitnehmer zumindest bereichsweise umschließt. Der Abstreifer kann auch so ausgebildet sein, dass er die Knoterstange wie ein Lager abstützt, dann übernimmt die Lagerung der Knoterstange gleichzeitig eine Abstreiffunktion. Ein Abstreifer mit einem rohrförmigen Querschnitt kann im Bereich des Mitnehmers einen Durchtrittschlitz aufweisen, durch den der Mitnehmer in axialer Richtung der Knoterstange in einer passenden Drehstellung beweglich ist. Wenn der Mitnehmer nur den Abschnitt des doppelten Garnstrangs von der Kolbenstange und/oder dem Mitnehmer abschiebt, der über diese Bauteile nach außen hervorsteht, wird der in der Nut befindliche Abschnitt des doppelten Garnstrangs nicht vom Abstreifer erfasst und kann in der Nut verbleiben. Dadurch rutscht die vom Abstreifer abgeschobene Schlaufe über den in der Nut befindlichen Abschnitt des doppelten Garnstrangs. Wenn das Garn der vom Abstreifer abgeschobenen Schlaufe stramm gezogen wird, bekneift diese Schlaufe den Hals des Abschnitts des doppelten Garnstrangs, der sich noch in der Nut befindet. Dadurch wird der fertige Knoten gebildet.

Weitere Merkmale der Erfindung ergeben sich aus den Ansprüchen, den Figuren und der nachfolgenden gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen untereinander oder aber in Alleinstellung verwendbar, soweit dem keine zwingenden technischen Hindernisse entgegen stehen.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Knotervorrichtung in der Ausgangsstellung,
- Fig. 2:: die Knotervorrichtung mit vorgeschobener Knoterstange,
- Fig. 3:: die Knoterstange mit teilweise aufgewickelter Schlaufe,
- Fig. 4:: die Knoterstange mit weiter aufgewickelter Schlaufe,
- Fig. 5:: die Knoterstange mit vorgeschobener Garnführungsvorrichtung,
- Fig. 6:: die Knotervorrichtung mit wieder zurückgezogener Garnführungsvorrichtung, und
- Fig. 7:: die Knoterstange mit abgezogenem Knoten.

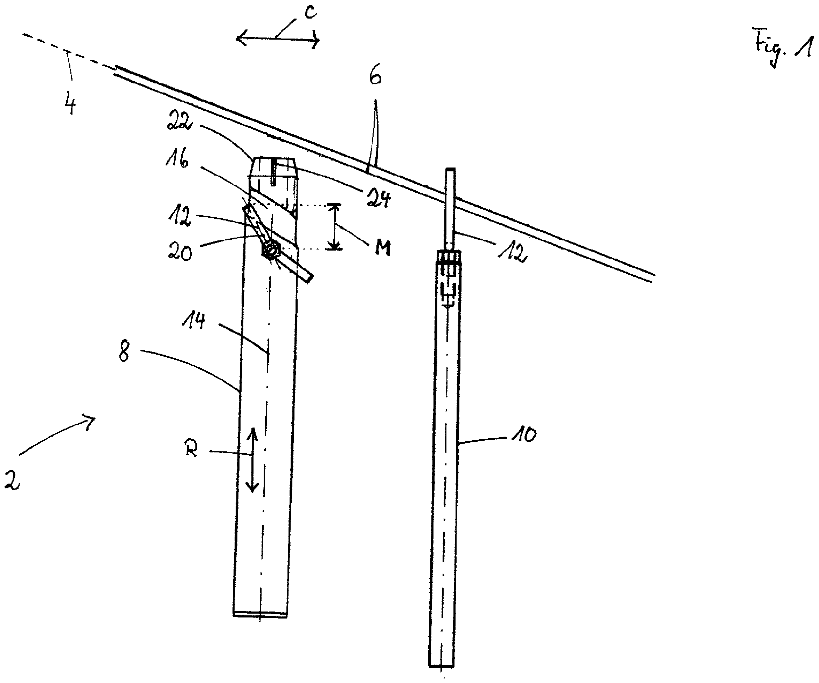

In Fig. 1 ist eine Knotervorrichtung 2 in der Ausgangsstellung gezeigt. In der Knotervorrichtung 2 ist der doppelte Garnstrang 6 entlang einer Vorhaltelinie 4 in einer Vorhalteposition gehalten. Der doppelte Garnstrang 6 muss mit einer gewissen Spannung gehalten sein, damit der von der Knotervorrichtung verarbeitet werden kann.

Der Knoten wird mit einer Knoterstange 8 gebildet. In Fig. 1 befindet sich die Knoterstange 8 in der Ausgangsstellung. Neben der Knoterstange 8 ist in Fig. 1 noch eine Garnführungsvorrichtung 10 gezeigt, die ergänzend zur Knoterstange 8 verwendet werden kann.

An der Knoterstange 8 ist ein Mitnehmer 12 ausgebildet, der mit seinen Konturen über den Hüllkreis des Stangenquerschnitts der Knoterstange 8 selbst hervorsteht.

Die Knoterstange 8 ist um die Drehachse 14 motorisch angetrieben drehbar. Der Antrieb ist zeichnerisch nicht dargestellt. Bei einer Drehbewegung kann der doppelte Garnstrang 6 außen auf die Umfangsfläche der Knoterstange 8 aufgewickelt werden.

In der Knoterstange 8 befindet sich außerdem eine Nut 16. Die Nut 16 ist eine Vertiefung, in die ein Abschnitt des doppelten Garnstrangs 6 hineinrutschen kann oder in die der doppelte Garnstrang mit einem Abschnitt hinein gewickelt wird. Die Längsachse 20 des fingerförmig ausgestalteten Mitnehmers 12 und die Nut 16 verlaufen schräg zur Drehachse 14 und sind somit auch schräg zur Drehachse 14 mit einer teilweisen Erstreckung in einer Richtung C der Knoterstange 8 ausgerichtet. Außerdem verläuft die Nut 16 in der Ruhestellung der Knoterstange 8 zumindest annähernd parallel zur Vorhaltelinie.

Der Mitnehmer 12 ist im Ausführungsbeispiel als eine Art Finger ausgestaltet, der sich mit seiner Längsachse 20 zumindest im Wesentlichen entlang einer Richtung M quer zur Vorhaltelinie 4 des doppelten Garnstrangs und zumindest annähernd längs der Drehachse der Knoterstange 8 erstreckt. Zwischen der Umfangskontur der Knoterstange 8 und dem Finger des Mitnehmers 12 befindet sich ein Zwischenraum 18, durch den der doppelte Garnstrang 6 zumindest einfach hindurchgeführt werden kann.

Das freie Ende 22 der Knoterstange 8 verjüngt sich zum Ende hin, um durch die Verjüngung das Abgleiten des fertig gebildeten Knotens von der Knoterstange 8 zu erleichtern. Im Bereich des freien Endes 22 der Knoterstange 8 befindet sich außerdem eine Messerklinge 24, mit der ein fertig geknoteter Garnstrang durchgeschnitten werden kann.

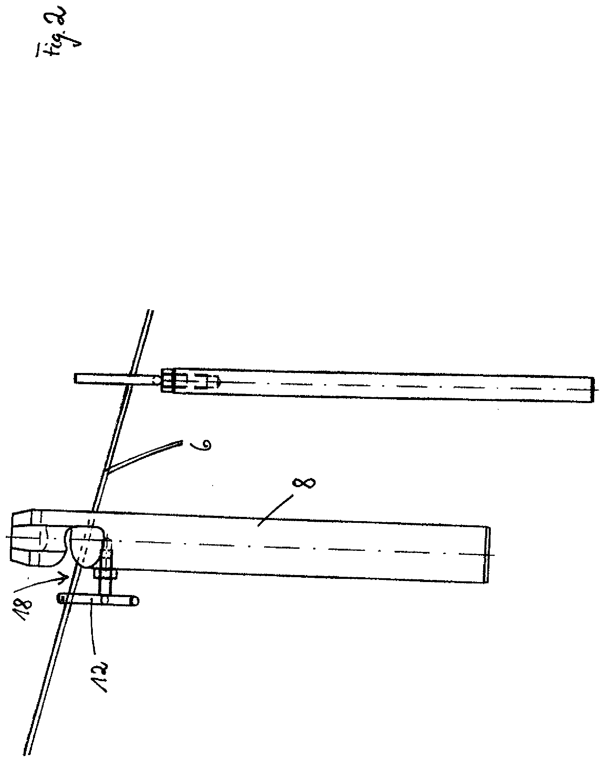

In Fig. 2 ist die Knoterstange 8 in einer vorgeschobenen Position gezeigt. In dieser Position ist die Knoterstange 8 um etwa eine Viertel bis halbe Drehung nach links verdreht. Durch diese Verdrehstellung kann der Finger des Mitnehmers 12 unter den doppelten Garnstrang 6 fassen. In dieser Position läuft der doppelte Garnstrang 6 unter der Knoterstange 8 hindurch.

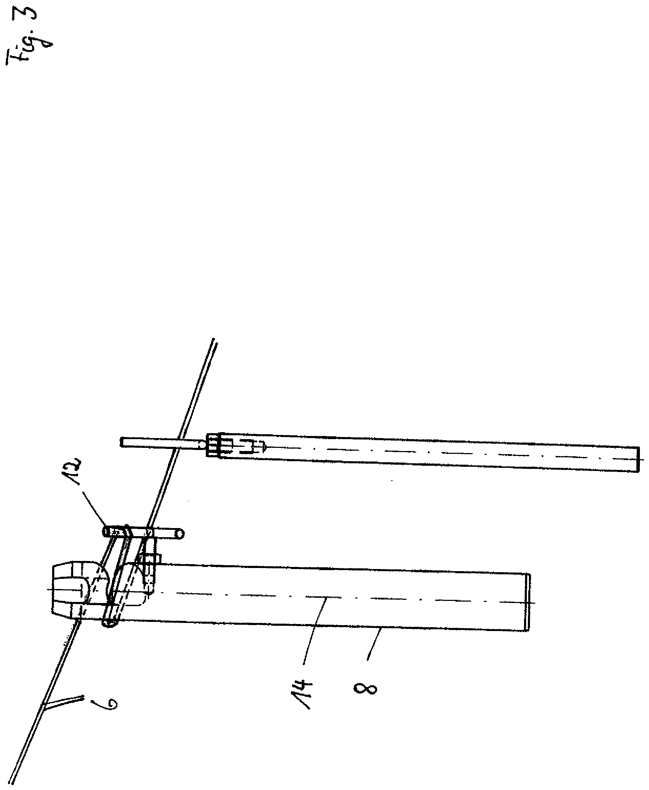

In Fig. 3 ist die Knoterstange 8 gezeigt, nachdem diese um eine halbe bis dreiviertel Drehung nach rechts aus der in Fig. 2 dargestellten Position um die Drehachse 14 gedreht worden ist. In dieser Drehstellung ist bereits eine erste Schlaufe auf die Knoterstange 8 aufgewickelt. Es ist gut erkennbar, wie der doppelte Garnstrang 6 um den Finger des Mitnehmers 12 gewickelt ist, so dass der Mitnehmer 12 bei einer Rotationsbewegung der Knoterstange 8 den doppelten Garnstrang 6 mitnimmt.

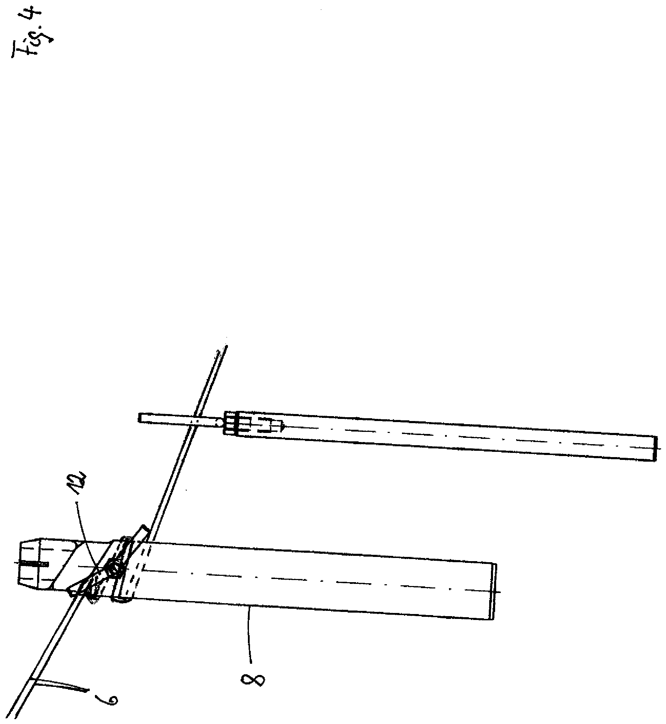

In Fig. 4 ist die Knoterstange 8 nach einer weiteren Drehbewegung um etwa eine dreiviertel Umdrehung gezeigt. In dieser Stellung befindet sich die Knoterstange 8 annähernd wieder in der in Fig. 1 gezeigten Ausgangsstellung. Auf die Knoterstange 8 ist nun ein längerer Abschnitt des doppelten Garnstrangs 6 aufgewickelt.

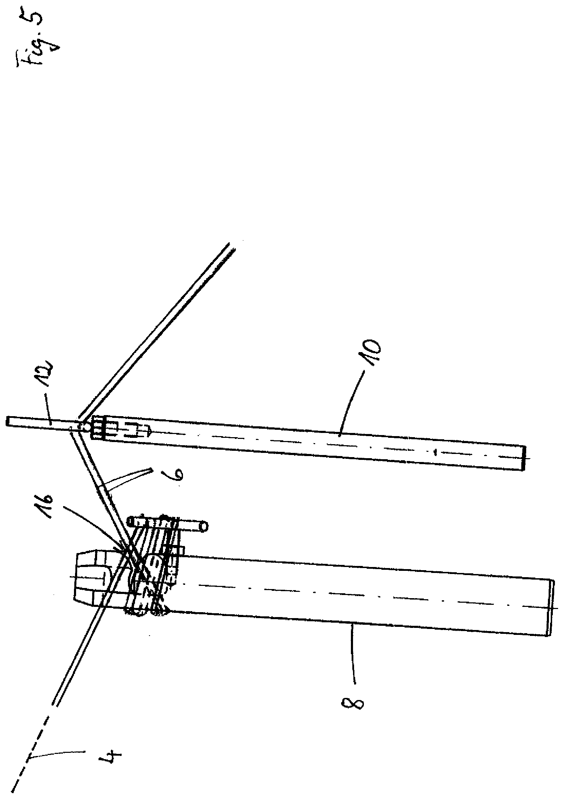

In Fig. 5 ist die Knoterstange 8 mit einer Garnführungsvorrichtung 10 gezeigt, die sich dort ebenfalls in einer vorgeschobenen Position befindet. Die Garnführungsvorrichtung 10 verfügt an ihrem dem doppelten Garnstrang 6 zugewandten Ende ebenfalls über einen Mitnehmer 12, der im Ausführungsbeispiel gabelartig ausgeführt ist, um damit den doppelten Garnstrang 6 bei der Vorschubbewegung gut einfangen zu können. Die Knoterstange 8 ist gegenüber der in Fig. 4 gezeigten Position zu der in der Fig. 5 gezeigten Position um etwa eineinviertel Umdrehungen weiter nach rechts gedreht worden. Dadurch hat sich dort ein längerer Abschnitt des doppelten Garnstrangs 6 auf der Knoterstange 8 aufgewickelt. In Fig. 5 ist erkennbar, dass die Garnführungsvorrichtung 10 so weit nach vorne vorgeschoben ist, dass sie den doppelten Garnstrang 6 mit ihrem Mitnehmer 12 aus der Vorhaltelinie 4 geschoben hat. Die Vorschubbewegung des doppelten Garnstrangs 6 reicht so weit, dass der doppelte Garnstrang 6 vom letzten Abschnitt aus, mit dem er noch auf dem Umfang der Knoterstange 8 aufliegt, bis zum Mitnehmer 12 der Garnführungsvorrichtung 10 so weit umgelenkt ist, dass der doppelte Garnstrang 6 in den Bereich der Öffnung der Nut 16 reicht. Wenn die Knoterstange 8 aus der in Fig. 5 dargestellten Position weiter nach rechts gedreht wird, wird der doppelte Garnstrang 6, der sich zwischen der Knoterstange 8 und der Garnführungsvorrichtung 10 befindet, unmittelbar in die Nut 16 eingewickelt.

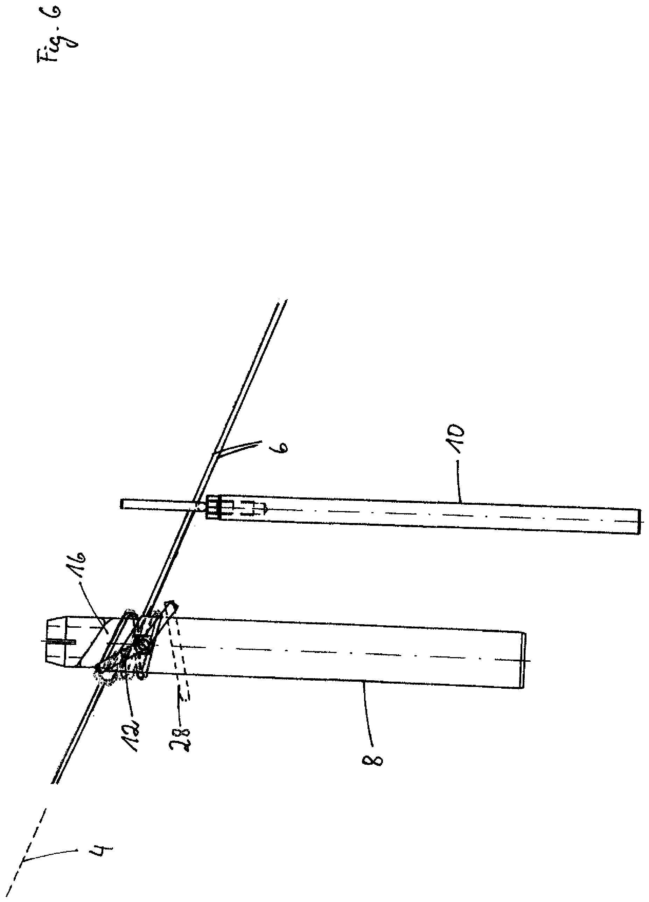

In Fig. 6 ist eine Situation gezeigt, in der die Garnführungsvorrichtung 10 wieder in ihre Ausgangsstellung zurückgefahren ist. Dadurch hat sich der Verlauf des doppelten Garnstrangs 6 im Bereich der Garnführungsvorrichtung 10 wieder dem Verlauf der Vorhaltelinie 4 annähernd angepasst. Die Knoterstange 8 befindet sich aber immer noch in ihrer ausgefahrenen Stellung. In dieser Stellung hat der Mitnehmer 12 bei der vorherigen Ausfahrbewegung einen in gestrichelten Linien angedeuteten Abstreifer 28 passiert, an dem der Mitnehmer 12 bei einer Ausfahrbewegung für einen Knotvorgang vorbei beweglich ist.

Die Knoterstange 8 ist gegenüber der Darstellung in Fig. 5 um etwa eine dreiviertel Drehung weiter gedreht dargestellt. Gegenüber der Ausgangsstellung in Fig. 1 ist die Knoterstange 8 damit insgesamt etwa drei Umdrehungen nach rechts gedreht worden. Demgemäß finden sich auch drei Schlaufen, die insgesamt auf die Knoterstange 8 aufgewickelt sind. Die letzte gewickelte Schlaufe verläuft wie in Fig. 6 gezeigt dabei durch den Boden der Nut 16. Die beiden anderen Wicklungen entsprechen den Wicklungen, die bereits in Fig. 5 gezeigt sind.

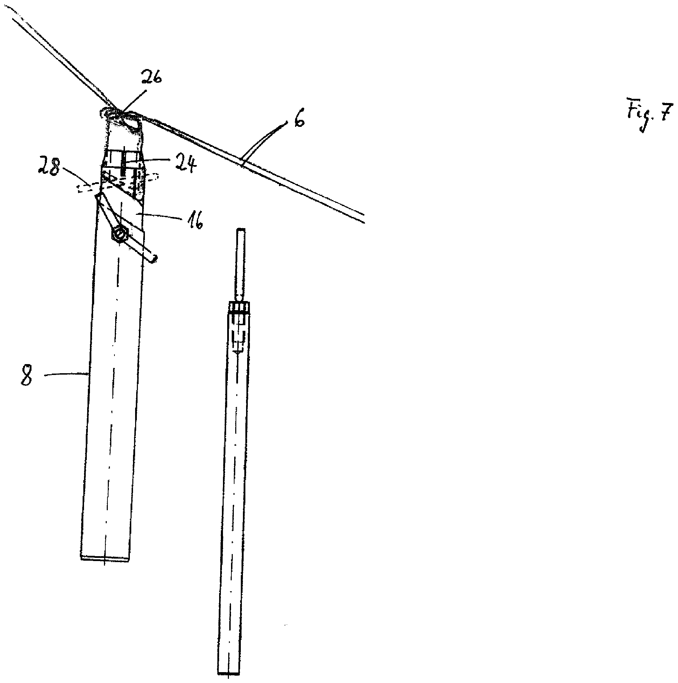

In Fig. 7 ist nun eine Situation gezeigt, in der der Knoten 26 von der Knoterstange 8 abgezogen ist. Der fertige Knoten 26 kann beispielsweise durch eine Rückfahrbewegung der Knoterstange 8 in die Ausgangsstellung hergestellt worden sein. Bei einer Rückfahrbewegung stößt der auf den Mitnehmer 12 aufgewickelte Garnstrang gegen den auch in Fig. 7 in gestrichelten Linien angedeuteten Abstreifer 28. Der Abstreifer 28 blockiert den aufgewickelten Garnstrang, der deshalb der weiteren Rückzugsbewegung der Knoterstange 8 nicht mehr folgen kann und dadurch zwangsweise von dem Mitnehmer 12 abgestreift wird. Da der in der Nut 16 befindliche Abschnitt des Garnstrangs nicht vom Abstreifer 28 erfasst wird, kann dieser in der Nut 16 verbleiben. Der Abzug des auf die Knoterstange 8 und den Mitnehmer 12 aufgewickelten doppelten Garnstrangs kann aber auch durch die Einwirkung einer Zuglast auf den doppelten Garnstrang, beispielsweise aus dem Materialbündel, erfolgen, das mit dem geknoteten Garn gebunden ist. Es können auch beide Effekte zusammenwirken.

In Fig. 7 ist erkennbar, dass der erste Teil der um die Knoterstange 8 gewickelten Schlaufe, nämlich der durch die Nut 16 verlaufende Abschnitt des doppelten Garnstrangs 6, noch in der Nut 16 hängt. Dieser in gestrichelten Linien gezeigte Abschnitt des doppelten Garnstrangs 6 muss noch durchgeschnitten werden, damit sich der doppelte Garnstrang 6 insgesamt von der Knoterstange 8 ablösen kann. Der Schnitt kann durch die Messerklinge 24 bewirkt werden, die sich im freien Ende der Knoterstange 8 befindet.

Zur Bildung eines neuen Knotens fährt die Knoterstange 8 wieder in die in Fig. 1 gezeigte Ausgangsstellung zurück. Der doppelte Garnstrang 6 kann durch eine geeignete Garnführung wieder entlang der Vorhaltelinie 4 in einer Vorhalteposition vorgehalten werden.

Die Erfindung ist nicht auf das vorstehende Ausführungsbeispiel beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

## Patentansprüche

1. Knotervorrichtung (2) zum Knoten eines in einer Vorhalteposition entlang einer Vorhaltelinie (4) vorgehaltenen doppelten Garnstrangs (6) eines Bindeguts mit einem um eine Drehachse (14) rotierend antreibbaren Knoterhaken, einer Garnführungsvorrichtung, mit der das Garn während eines Knotvorgangs geführt ist, und einer Trennvorrichtung zum Abschneiden eines fertig geknoteten Strangs des Bindeguts, **dadurch gekennzeichnet, dass** der Knoterhaken als eine Knoterstange (8) ausgebildet ist, die während eines Knotvorgangs mittels eines motorischen Antriebs in axialer Richtung (R) entlang eines Verstellweges beweglich ist, über die Umfangsform der Knoterstange (8) ein Mitnehmer (12) zum Erfassen und Mitnehmen des doppelten Garnstrangs (6) hervorsteht und in die Umfangsform der Knoterstange (8) eine Nut (16) eingeformt ist, die eine Form zur Aufnahme eines Abschnitts des doppelten Garnstrangs (6) aufweist.

2. Knotervorrichtung (2) nach Anspruch 1, **dadurch gekennzeichnet, dass** der Mitnehmer (12) als ein Finger ausgestaltet ist, der sich mit seiner Längsachse zumindest im Wesentlichen in eine Richtung (M) quer zur Vorhaltelinie (4) des doppelten Garnstrangs (6) und zumindest annähernd längs der Drehachse (14) der Knoterstange (8) erstreckt und zumindest in einem Abschnitt so über die Umfangsform der Knoterstange (8) hervorstehend positioniert ist, dass der doppelte Garnstrang (6) durch den Zwischenraum (18) zwischen dem Mitnehmer (12) und dem Außenumfang der Knoterstange (8) im Bereich des Mitnehmers (12) hindurch geführt ist.

3. Knotervorrichtung (2) nach Anspruch 1 oder 2, **dadurch gekennzeichnet, dass** die Vorhalterichtung des doppelten Garnstrangs (6) in seiner Vorhalteposition schräg zur Drehachse (14) der Knoterstange (8) verläuft.

4. Knotervorrichtung (2) nach einem der vorhergehenden Ansprüche, **dadurch gekennzeichnet, dass** die Längsachse (20) des Mitnehmers (12) und die Nut (16) schräg zur Drehachse (14) der Knoterstange (8) verläuft.

5. Knotervorrichtung (2) nach einem der vorhergehenden Ansprüche, **dadurch gekennzeichnet, dass** die Nut (16) in der Ruhestellung der Knoterstange (8) zumindest annähernd parallel zur Vorhaltelinie (4) verläuft.

6. Knotervorrichtung (2) nach einem der vorhergehenden Ansprüche, **dadurch gekennzeichnet, dass** die Knoterstange (8) an ihrem freien Ende (22) eine sich in Abzugsrichtung verjüngende Form aufweist.

7. Knotervorrichtung (2) nach einem der vorhergehenden Ansprüche, **dadurch gekennzeichnet, dass** benachbart zur Knoterstange (8) eine Garnführungsvorrichtung (10) angeordnet ist, die motorisch aus einer Ruhestellung in eine Richtung auf den in seiner Vorhalteposition vorgehaltenen doppelten Garnstrang (6) zu beweglich ist, wobei die Garnführungsvorrichtung (10) einen Mitnehmer (12) aufweist, der mit seiner Raumform den doppelten Garnstrang (6) bei einer fortgesetzten Bewegung der Garnführungsvorrichtung (10) über die Vorhaltelinie (4) hinweg in Bewegungsrichtung von der Vorhaltelinie (4) wegbewegt, so dass sich der doppelte Garnstrang (6) dadurch bei einer Rotationsbewegung der Knoterstange (8) an einer in axialer Richtung (R) versetzten Stelle auf die Knoterstange (8) aufwickelt.

8. Knotervorrichtung (2) nach Anspruch 7, **dadurch gekennzeichnet, dass** die Garnführungsvorrichtung (10) so weit vorfährt, dass der doppelte Garnstrang (6) in einer Vorhalteposition gehalten ist, in der er in die in der Knoterstange (8) befindliche Nut (16) einläuft.

9. Knotervorrichtung (2) nach einem der vorhergehenden Ansprüche, **dadurch gekennzeichnet, dass** die Knoterstange (8) für Bewegungen in axialer Richtung (R) und/oder in Rotationsrichtung von einem elektrischen Servomotor angetrieben ist.

10. Knotervorrichtung (2) nach einem der vorhergehenden Ansprüche 7 oder 8, **dadurch gekennzeichnet, dass** die Garnführungsvorrichtung (10) von einem elektrischen Servomotor angetrieben ist.

11. Knotervorrichtung (2) nach einem der vorhergehenden Ansprüche, **dadurch gekennzeichnet, dass** in der Nut (16) und/oder am freien Ende der Knoterstange (8) eine Messerklinge (24) angeordnet ist.

12. Knotervorrichtung (2) nach einem der vorhergehenden Ansprüche, **dadurch gekennzeichnet, dass** entlang des Verstellweges der Knoterstange (8) ein Abstreifer (28) angeordnet ist, an dem der Mitnehmer (12) bei einem Knotvorgang vorbei beweglich ist, wobei der Abstreifer (28) so dicht an den Außenumfang der Knoterstange (8) und/oder des Mitnehmers (12) herangeführt ist, dass dieser einen auf die Knoterstange (8) und/oder den Mitnehmer (12) aufgewickelten doppelten Garnstrang bei einer Verstellbewegung der Knoterstange (8) in axialer Richtung sperrt.

## Claims

1. Knotting device (2) for knotting a double twine strand (6) of a bound material, which is led along a lead line (4) in a lead position, with a knotting hook driven so as to rotate around an axis of rotation (14), a twine guide device, by means of which the twine is guided during a knotting process, and a separation device to cut a finished knotted strand of the bound material, **characterised in that** the knotting hook is formed as a knotting rod (8), which is movable during a knotting process by means of a motorised drive in the axial direction (R) along an adjustment path, over the circumferential shape of the knotting rod (8) protrudes an entrainment element (12) to gather and entrain the double twine strand (6) and a groove (16) is formed into the circumferential shape of the knotting rod (8), which has a shape to receive a section of the double twine strand (6).

2. Knotting device (2) according to claim 1, **characterised in that** the entrainment element (12) is configured as a finger which extends with its longitudinal axis at least substantially in one direction (M) transversely to the lead line (4) of the double twine strand (6) and at least approximately along the axis of rotation (14) of the knotting rod (8) and is positioned protruding at least in one section over the circumferential shape of the knotting rod (8) such that the double twine strand (6) is guided through the intermediate space (18) between the entrainment element (12) and the outer circumference of the knotting rod (8) in the region of the entrainment element (12).

3. Knotting device (2) according to claim 1 or 2, **characterised in that** the lead direction of the double twine strand (6), in its lead position, runs obliquely to the axis of rotation (14) of the knotting rod (8).

4. Knotting device (2) according to any one of the preceding claims, **characterised in that** the longitudinal axis (20) of the entrainment element (12) and the groove (16) runs obliquely to the axis of rotation (14) of the knotting rod (8).

5. Knotting device (2) according to any one of the preceding claims, **characterised in that** the groove (16), in the rest position of the knotting rod (8), runs at least approximately parallel to the lead line (4).

6. Knotting device (2) according to any one of the preceding claims, **characterised in that** the knotting rod (8), at its free end (22), has a shape tapering in the pull-out direction.

7. Knotting device (2) according to any one of the preceding claims, **characterised in that** adjacent to the knotting rod (8) a twine guide device (10) is arranged, which is movable in a motorised manner from a rest position in a direction towards the double twine strand (6) led in its lead position, wherein the twine guide device (10) has an entrainment element (12) which, with its spatial shape, moves the double twine strand (6), during a continuous movement of the twine guide device (10), over the lead line (4) in a movement direction away from the lead line (4) such that the double twine strand (6) is, as a result, wound during a rotational movement of the knotting rod (8) on a point, offset in the axial direction (R), on the knotting rod (8).

8. Knotting device (2) according to claim 7, **characterised in that** the twine guide device (10) is moved forwards so far such that the double twine strand (6) is held in a lead position in which it runs into the groove (16) located in the knotting rod (8).

9. Knotting device (2) according to any one of the preceding claims, **characterised in that** the knotting rod (8) is driven by an electric servo motor for movements in the axial direction (R) and/or in the rotational direction.

10. Knotting device (2) according to any one of preceding claims 7 or 8, **characterised in that** the twine guide device (10) is driven by an electric servo motor.

11. Knotting device (2) according to any one of the preceding claims, **characterised in that** a knife blade (24) is arranged in the groove (16) and/or on the free end of the knotting rod (8).

12. Knotting device (2) according to any one of the preceding claims, **characterised in that** a stripper (28) is arranged along the adjustment path of the knotting rod (8), past which the entrainment element (12) is movable during a knotting process, wherein the stripper (28) is guided closely along the outer circumference of the knotting rod (8) and/or of the entrainment element (12) such that it locks a double twine strand wound on the knotting rod (8) and/or on the entrainment element (12) during an adjustment movement of the knotting rod (8) in the axial direction.

## Revendications

1. Dispositif noueur (2) destiné à nouer un écheveau de ficelle double (6) d'un matériau de liage fourni dans une position de fourniture le long d'une ligne de fourniture (4) comprenant un crochet de noueur qui peut être entraîné en rotation autour d'un axe de rotation (14),, un moyen de guidage de ficelle, qui permet de guider la ficelle pendant un processus de nouage, et un moyen de séparation pour couper un écheveau du matériau de liage déjà noué, **caractérisé en ce que** le crochet de noueur est réalisé sous la forme d'une tige de noueur (8) qui, pendant un processus de nouage, est mobile le long d'un trajet de réglage dans la direction axiale (R) à l'aide d'un entraînement motorisé, un moyen d'entraînement (12) faisant saillie au-dessus de la forme circonférentielle de la tige de noueur (8) pour saisir et entraîner l'écheveau de ficelle double (6) et, dans la forme circonférentielle de la tige de noueur (8), est façonnée une rainure (16) qui présente une forme pour recevoir une partie de l'écheveau de ficelle double (6).

2. Dispositif noueur (2) selon la revendication 1, **caractérisé en ce que** le moyen d'entraînement (12) est configuré sous la forme d'un doigt qui s'étend avec son axe longitudinal au moins sensiblement dans une direction (M) transversale à la ligne de fourniture (4) de l'écheveau de ficelle double (6) et au moins approximativement le long de l'axe de rotation (14) de la tige de noueur (8) et est positionné au moins dans une partie en saillie au-dessus de la forme circonférentielle de la tige de noueur (8) de telle sorte que l'écheveau de ficelle double (6) est guidé à travers l'espace intermédiaire (18) entre le moyen d'entraînement (12) et la circonférence extérieure de la tige de noueur (8) au niveau du moyen d'entraînement (12).

3. Dispositif noueur (2) selon la revendication 1 ou 2, **caractérisé en ce que** la direction de fourniture de l'écheveau de ficelle double (6) s'étend dans sa position de fourniture de manière inclinée par rapport à l'axe de rotation (14) de la tige de noueur (8).

4. Dispositif noueur (2) selon une des revendications précédentes, **caractérisé en ce que** l'axe longitudinal (20) du moyen d'entraînement (12) et la rainure (16) s'étendent de manière inclinée par rapport à l'axe de rotation (14) de la tige de noueur (8).

5. Dispositif noueur (2) selon une des revendications précédentes, **caractérisé en ce que** la rainure (16) s'étend dans la position au repos de la tige de noueur (8) au moins approximativement parallèlement à la ligne de fourniture (4).

6. Dispositif noueur (2) selon une des revendications précédentes, **caractérisé en ce que** la tige de noueur (8) présente à son extrémité libre (22) une forme se rétrécissant dans la direction d'enlèvement.

7. Dispositif noueur (2) selon une des revendications précédentes, **caractérisé en ce que**, de manière adjacente à la tige de noueur (8), est disposé un moyen de guidage de ficelle (10) qui est mobile de manière motorisée depuis une position de repos dans une direction sur l'écheveau de ficelle double (6) fourni dans sa position de fourniture, le moyen de guidage de ficelle (10) présentant un moyen d'entraînement (12) qui, avec sa forme spatiale, écarte de la ligne de fourniture (4) l'écheveau de ficelle double (6) lors d'un déplacement continu du moyen de guidage de ficelle (10) sur la ligne de fourniture (4) dans la direction de déplacement de telle sorte que l'écheveau de ficelle double (6) s'embobine ainsi sur la tige de noueur (8) en un emplacement décalé dans la direction axiale (R) lors d'un mouvement de rotation de la tige de noueur (8).

8. Dispositif noueur (2) selon la revendication 7, **caractérisé en ce que** le moyen de guidage de ficelle (10) est avancé de telle sorte que l'écheveau de ficelle double (6) est maintenu dans une position de fourniture dans laquelle il entre dans la rainure (16) qui se trouve dans la tige de noueur (8).

9. Dispositif noueur (2) selon une des revendications précédentes, **caractérisé en ce que** la tige de noueur (8) est entraînée par un servomoteur électrique pour les déplacements dans la direction axiale (R) et/ou dans la direction de rotation.

10. Dispositif noueur (2) selon une des revendications précédentes 7 ou 8, **caractérisé en ce que** le moyen de guidage de ficelle (10) est entraîné par un servomoteur électrique.

11. Dispositif noueur (2) selon une des revendications précédentes, **caractérisé en ce que** dans la rainure (16) et/ou à l'extrémité libre de la tige de noueur (8) est disposé une lame de couteau (24).

12. Dispositif noueur (2) selon une des revendications précédentes, **caractérisé en ce que**, le long du trajet de réglage de la tige de noueur (8), est disposé un déflecteur (28) sur lequel le moyen d'entraînement (12) est mobile lors d'un processus de nouage, le déflecteur (28) étant avancé de manière si proche sur la circonférence extérieure de la tige de noueur (8) et/ou du moyen d'entraînement (12) qu'il bloque un écheveau de ficelle double embobiné sur la tige de noueur (8) et/ou le moyen d'entraînement (12) lors d'un mouvement de réglage de la tige de noueur (8) dans la direction axiale.
